# EUROPEAN PATENT SPECIFICATION

(11) **EP 2 626 551 B1**
(45) Date of publication and mention of the grant of the patent: **12.06.2019**
(21) Application number: 13154383.7
(22) Date of filing: 07.02.2013
(51) Int. Cl.: F03D 7/02, F03D 7/04

(54) **A method of controlling a wind turbine**
Verfahren zur Steuerung einer Windturbine
Procédé de commande d'une éolienne

(30) Priority: 10.02.2012 US 201261597197 P; 13.02.2012 DK 201270069
(43) Date of publication of application: 14.08.2013
(73) Proprietor: Vestas Wind Systems A/S, 8200 Aarhus N (DK)
(72) Inventor: Pericleous, Alex, Sutton, SM2 5DT (GB); Hales, Kelvin, Egham, Surrey TW20 9NB (GB)
(74) Representative: Vestas Patents Department

(56) References cited:
- EP-A2- 2 128 385
- WO-A2-2011/157272
- GB-A- 2 469 854
- GB-A- 2 475 694
- US-A1- 2009 028 704

## Description

Most modern wind turbines are controlled and regulated continuously during operation with the purpose of ensuring optimal performance of the wind turbines in all operating conditions, such as at different wind speeds or subject to different demands from the power grid.

A well-known and effective method of regulating the loads on the rotor is by pitching the blades about the longitudinal axis of each blade. However, as the blades increase in size on modern wind turbines (which at present can be 60 m or longer) pitching becomes a relatively slow regulation method incapable of changing the blade positions fast enough to account for wind gusts, turbulence or other relatively fast load variations.

Another way of regulating the loads on the blades is by changing their aerodynamic surfaces or shapes over parts or the entire length of the blade, thereby increasing or decreasing the blade lift or drag correspondingly. Different means of changing the airfoil shape are known such as different types of movable aerodynamic device, for example trailing edge flaps, leading edge slats, spoilers or active vortex generators.

These movable aerodynamic devices are operated to reduce loading on the wind turbine blade by counteracting wind disturbances in the oncoming wind flow. The movable aerodynamic devices change the shape of the rotor blade airfoil section so that the lift and/or drag forces generated by the blade are smoothed out, with the result that the loading on the rotor blade is reduced. Reducing the loading experienced by the rotor blade also reduces the flapwise movement of the rotor blade. This reduces the fatigue loading of the rotor blade.

However, when designing a wind turbine blade with a movable aerodynamic device, such as a trailing edge flap, it is necessary to ensure that the use of such a device does not result in the blade being subjected to loading that exceeds its design loads. It is the aim of the present invention to provide a method and a controller for a movable aerodynamic device that prevents the rotor blade being subjected to unacceptable load levels caused by the movable aerodynamic device.

GB2469854 describes a wind turbine blade having two devices for modifying the aerodynamic surface or shape of the blade. The first device operates up to a first frequency and the second device operates up to a second frequency, where the second frequency is higher than the first frequency.

According to a first aspect of the present invention, there is provided a method of controlling a movable aerodynamic device on a wind turbine rotor blade according to claim 1.

The movable aerodynamic device, which may for example be a trailing edge flap, is configured to move in order to alter the aerodynamic profile of the blade. Altering the aerodynamic profile of the blade will change the aerodynamic forces generated by the rotor blade in order to reduce loading on the wind turbine blade.

During operation, the rotor blades of a wind turbine rotate through a substantially vertical plane. The weight of the rotor blade itself generates alternating tensile and compression forces along its length as it rotates, which results in cyclic loading of each rotor blade. In particular, the alternating tensile and compression forces are experienced along the leading edge of a blade and along the trailing edge of a blade. These loads are commonly referred to in the art as "edgewise loads", or they are sometimes known as "chordwise loads". The edgewise loads result partly from gravitational loading and this edgewise loading increases from the tip of the blade to the root of the blade; edgewise loading also results from acceleration/deceleration of the rotor (inertial loading), structural coupling between flapwise and edgewise movement, and changes in aerodynamic drag which can be caused by flaps being operated. The rotor blades during operation are also subjected to flapwise loads due to wind disturbances such as turbulence and gusts. "Flapwise" is typically used in the art to refer to the direction substantially normal to the chord of the blade, where the "chord" is the distance between the leading edge and the trailing edge, i.e. the flapwise direction is the direction in which the aerodynamic lift acts. The flapwise direction is perpendicular to the edgewise direction.

The present invention prevents the movable aerodynamic device from operating in a predetermined frequency band in order to prevent the rotor blade being subjected to unacceptably high levels of loading.

By "predetermined frequency band" is meant some frequency band that is determined when the wind turbine is designed.

The step of preventing the movable aerodynamic device from operating in a predetermined frequency band comprises: removing frequency components from the device position demand at the edgewise resonant frequency of the rotor blade.

The movable aerodynamic device is used to control fatigue loading on the blade, and in particular to reduce the flapwise loading and movement of the blade. When controlling the flapwise loading on the blade there is a risk that the edgewise loading on the blade will be increased if the edgewise resonant frequency of the blade is stimulated - this is because there may be structural coupling effects between the flapwise movement of the blade which the movable aerodynamic device is controlling and edgewise movement of the blade. The present invention prevents the edgewise loading from being increased when the movable aerodynamic device is operated by preventing the device from moving at the edgewise resonant frequency of the rotor blade.

Preferably, the width of the frequency band is 0.2 Hz. The width of the frequency band must be narrow enough so that it does not have a deleterious effect on the control of the flapwise loading, but wide enough so that it includes the range of edgewise resonant frequencies that occur during operating conditions and as a result of manufacturing tolerances during manufacture of the blade.

Preferably, the device position demand is calculated to reduce flapwise loading in the blade.

Preferably, the device position demand comprises:
a feed-forward device position demand component as a function of time; and/or
a feedback device position demand component as a function of time. Preferably, the feed-forward device position demand component is a device position determined to counteract wind disturbances at the rotor blade or upstream of the rotor blade.

These wind disturbances may be local wind gusts or turbulence. The wind disturbances may be sensed at the rotor blade with a pitot tube for example, or at a distance in front of the blade up to 100 meters by a LIDAR unit.

Preferably, the step of determining the feed-forward device position demand component comprises:
detecting wind conditions at the rotor blade or upstream of the rotor blade with a sensor; and
determining the feed-forward device position demand component so that movement of the device according to the feed-forward device position demand component counteracts wind disturbances in the detected wind conditions, such that loading in the blade is reduced.

Preferably, the feedback device position demand component is a device position determined to minimise changes in loading of the blade.

Preferably, the step of determining the feedback device position demand component comprises:
detecting changes in loading of the blade with a sensor;
determining the feedback device position demand component so that movement of the device according to the feedback device position demand component minimises the changes in loading of the blade.

Preferably, the step of determining the device position demand comprises:
summing the feed-forward device position demand component with the feedback device position demand component.

The step of preventing the device from operating in a predetermined frequency band comprises:
applying a filter to the device position demand.

The step of preventing the device from operating in a predetermined frequency band may comprise:
applying a filter to the feed-forward device position demand component; and/or
applying a filter to the feedback device position demand component.

The step of preventing the device from operating in a predetermined frequency band may comprise: applying a filter to the detected wind conditions.

The step of preventing the device from operating in a predetermined frequency band may comprise: applying a filter to the detected changes in loading of the blade.

The filter may comprise a band-stop filter.

The filter may comprise a notch filter.

The filter may comprise a high-pass filter or a low-pass filter.

The movable aerodynamic device may be one of a trailing edge flap, a leading edge flap, a movable spoiler, a microtab, a movable vortex generator.

Preferably, the movable aerodynamic device is a trailing edge flap and the device position demand is a flap angle demand.

According to a second aspect of the present invention there is provided a controller for a wind turbine rotor blade, the wind turbine rotor blade having a movable aerodynamic device, the controller being arranged to carry out the method as described above according to the first aspect of the present invention.

According to a third aspect of the present invention there is provided a wind turbine having a rotor blade having a movable aerodynamic device, the wind turbine comprising a controller according to the second aspect of the present invention.

Preferably, the wind turbine is a three blades upwind horizontal axis turbine.

The present invention will now be described in more detail, by way of example only, with reference to the accompanying drawings in which:
Figure 1 is a view of a horizontal axis wind turbine;
Figure 2 is a view of a wind turbine blade;
Figures 3a and 3b are cross sectional views of a wind turbine blade;
Figure 4 is a schematic of a first example of a controller according to the invention;
Figure 5 shows a change in lift value as a function of time;
Figure 6 shows a flap angle position as a function of time;
Figure 7 shows edgewise loading as a function of time;
Figure 8 and 9 show edgewise loading in the frequency domain;
Figure 10 is a schematic of a second example of a controller according to the invention.

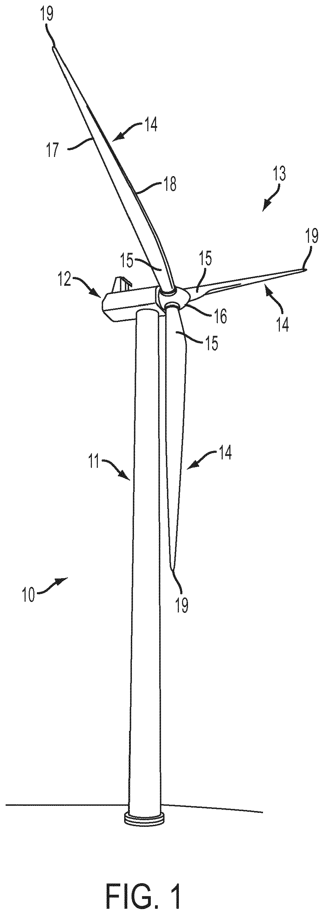

Figure 1 shows a horizontal axis wind turbine 10 according to the invention. The turbine comprises a tower 11 which supports a nacelle 12. The wind turbine 10 comprises a rotor 13 made up of three blades 14 each having a root end 15 mounted on a hub 16. Each blade 14 comprises a leading edge 17, a trailing edge 18, and a tip 19.

As is well known in the art, each blade 14 can pitch about its own pitch axis which extends longitudinally along the span of the blade. The blades 14 are typically set at a fixed pitch angle until a rated wind speed is reached. At wind speeds above the rated wind speed, the blades 14 are pitched out of the wind in order to regulate the power output of the wind turbine so that the rated power output of the wind turbine is not exceeded. The turbine's controller monitors the electrical power output of the turbine and if the power output is too high, the blades are pitched out of the wind. Conversely, the blades are pitched back into the wind whenever the wind drops again and the electrical power output drops.

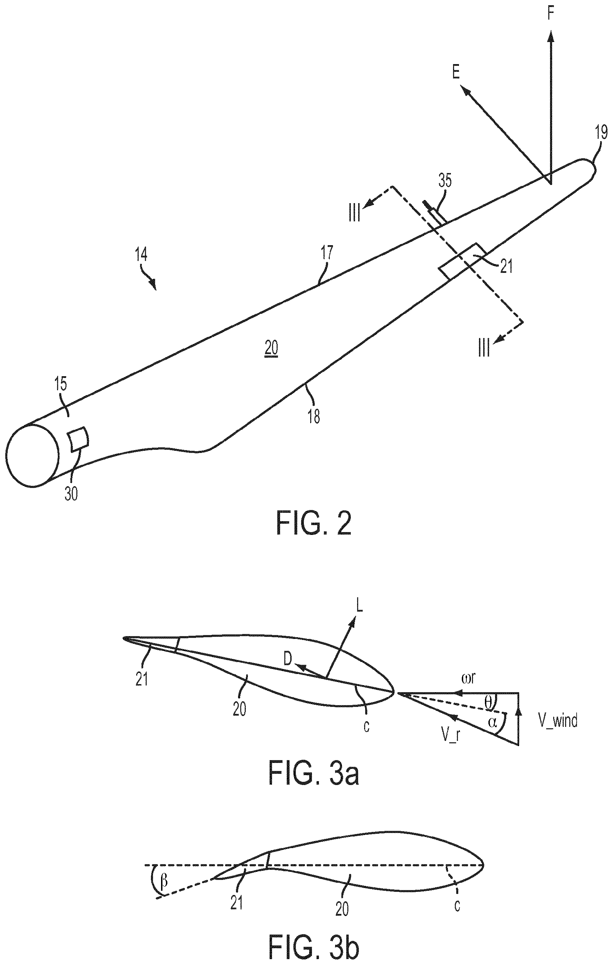

Figure 2 illustrates a blade 14 according to the invention. The blade 14 comprises a blade body 20 and a trailing edge flap 21 connected to the blade body for modifying the aerodynamic surface or shape of the rotor blade. In use, when the turbine is generating power, the flap 21 is actuated so that it deflects, in order to alter the loads experienced by the wind turbine 1.

Figure 3a is a cross section showing the blade profile along the line III-III in Figure 2 when the flap 21 is not deflected. Figure 3b is a cross section showing the blade profile along the line III-III in Figure 2 showing the flap 21 deflected. As can be seen the flap is deflected an angle β relative to the chord line c.

Although one trailing edge flaps 21 is shown, it should be appreciated that there may be more trailing edge flaps. For example, there may be three trailing edge flaps 21 per blade 14. The flaps are actuated by actuation means not shown; the actuation means may include electronic actuators, piezo-electric actuators or pneumatic actuators such as described in WO 2010/043647.

In use, the wind turbine blades 14 experience flapwise loads substantially normal to the chord c of the blade. Figure 2 shows the flapwise loads by the arrow F. Although only a point load is shown, it should be appreciated that the flapwise loads F act along the span of the blade 14. In use the blade also experience edgewise loads, and the direction of the edgewise loads is shown by the arrow E.

Sensors 30 are provided at the root of the blade to measure the loading on the blade. In this example, the sensor 30 is a strain gauge at the root of the blade that measures the blade root bending moment in the flapwise direction and the edgewise direction. Further strain gauges may be located along the longitudinal direction of the blade for example at 20%, 40%, 50%, 60%, 75% and 80% of the blade radius to measure the loading on the blade.

A five-hole pitot tube 35 is associated with the flap 21 and is mounted at the leading edge 17 to measure the wind speed and the angle of attack at the spanwise location of the flap. The pitot tube 35 detects the local wind conditions at the blade 14 or just in front of the blade and this information is used to control the flap 21 in order to reduce the loading experienced by the blade. In this example, the flap 21 is configured in order to reduce the flapwise loading of the blade, and in particular the flapwise blade root bending moment. The wind conditions in front of the blade can be detected by other sensors, such as by LIDAR or actually by using the flap as a sensor as described in EP2222955. A controller (not shown in Figure 2) uses the measurements from the pitot tube 35 (or other wind condition sensor) to control the flap 21.

Figure 3a shows the local wind and aerodynamic forces at a blade section. As can be seen, the resultant wind velocity V_r is a combination of the free wind velocity V_wind and the rotational speed ωr of the blade 14 at that radial location. The resultant wind velocity V_r is at an angle to the chord c of the blade profile and this is the angle of attack α. The pitch angle θ is the angle between the chord c and the rotor plane (where the rotor plane is the rotational plane of the rotor which is normal to the rotational axis of the rotor). The pitch angle θ is set for the whole blade 14 by rotating the blade about its longitudinal axis. The lift force for the blade section is defined as L and the drag force for the blade section is defined as D.

Moving the flap to different angles (as shown in Figure 3b) changes the lift and drag force at the blade section to alter the aerodynamic performance of the blade. Therefore, the aerodynamic loads experienced by the blade can be regulated by moving the flap 21 in order to smooth out fluctuations in the lift force, where the fluctuations may be caused by local wind conditions.

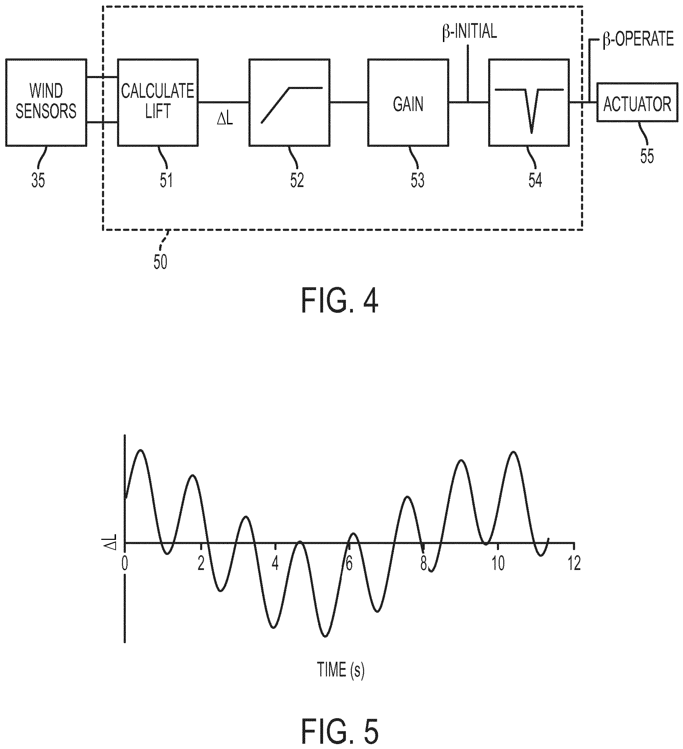

Figure 4 is a schematic of a first example of the controller 50 to control a flap 21. At the input to the controller 50 are the sensed wind conditions from the pitot tube 35 and at the output is a flap angle demand to be sent to an actuator 55 used to drive the flap to the desired angle. In the controller, the wind speed and the angle of attack sensed by the pitot tube are 35 are passed to a lift calculation unit 51 which calculates the change in lift at the blade section (to be provided by moving the flap) that is needed to counteract wind disturbances to keep a constant lift force at the blade section - this change in lift value is defined as ΔL.

The wind disturbances may be a result of turbulence, or local gusts. These vary as a function of time and therefore, ΔL also varies as a function of time.

The output from the lift calculation unit 51, ΔL, is passed to a high pass filter 52 in order to remove low frequency components from the ΔL signal. The purpose of the high pass filter 52 is to ensure that the flaps are used to counteract fluctuations caused by the turbulent wind conditions and the rotation of the blades, rather than the low frequency variations in the average wind speed. In this example, the high pass filter is arranged to remove frequency components below the rotation frequency of the rotor.

The filtered ΔL signal is then sent to an amplifier 53 which applies a gain to the ΔL signal. The output of the amplifier 53 is the flap angle demand to be sent to the actuator 55 in order to move the flap. In this example, the amplifier 53 is linear, but it is also possible to apply a non-linear gain. However, before the flap angle demand output from the amplifier is sent to the actuator 55, it is passed through a notch filter 54 in order to remove predetermined frequency components from the flap angle demand.

The flap 21 is used to control the flapwise bending moments of the rotor blade 14. However, the inventors of the invention have realised that in a wind turbine blade there is coupling between the flapwise moments of the blade and the edgewise moments of the blade, and if the flap 21 is excited in order to reduce flapwise moments this may have an adverse effect on the edgewise moments of the blade. If the flap 21 is operated at a frequency that happens to coincide with an edgewise resonant frequency, the flap will stimulate the edgewise resonant mode and lead to high edgewise loads in the blades which could potentially cause damage to the blade.

The notch filter 54 is configured to remove frequencies from the flap angle demand at the edgewise resonant frequency of the blade. The blade may have more than one edgewise resonant frequency, but in this example the notch filter 54 is configured to remove the lowest edgewise resonant frequency only as the first edgewise frequency is typically the most dominant edgewise frequency.

In this example, the blade 14 is 45 meters long and the edgewise resonant frequency of the blade is 0.9 Hz. The notch filter 54 is arranged to attenuate frequencies at and around this edgewise resonant frequency, so in this example the notch filter 54 removes frequency components in the flap angle demand from 0.8 Hz to 1 Hz. By removing these frequency components from the flap angle demand signal, and hence preventing the flap 21 from operating at this frequency range, stimulation of the edgewise resonant frequency of the blade is avoided.

The term "flap angle demand" is used herein to refer to the signal from the amplifier 53, that is the flap angle demand before it is passed through the notch filter 54. The output of the notch filter is referred to herein as the "operating flap angle demand" and it is this signal that is sent to the actuator 55 to move the flap. In other words, "flap angle demand" refers to the pre-notch filtered signal and "operating flap angle demand" refers to the post-notch filtered signal. The operating flap angle demand is the angle at which the flap is moved to, namely β according to Figure 3b.

To avoid confusion, the term "flap angle demand" will now be referred to as "initial angle, β_initial" and the term "operating flap angle demand, β_operate" will now be referred to as "operating angle, β_operate".

The controller 50 will now be described further with reference to the graphs in Figures 5 to 9.

In Figure 5, the change in lift value ΔL is shown as a function of time, where ΔL is calculated by the lift calculation unit 51. This change in lift value ΔL is related to the wind disturbances, and as the wind is stochastic the ΔL value will represent these stochastic disturbances as ΔL is determined in order to counteract the wind disturbances.

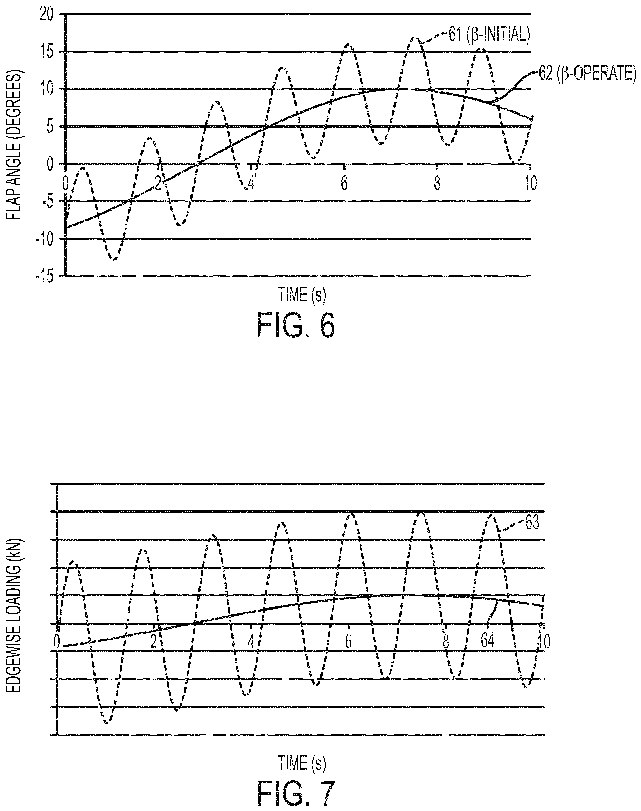

Figure 6 shows the initial angle (β_initial) and the operating angle (β_operate) as a function of time. The dashed line 61 is the initial angle (β_initial), measured in degrees and the solid line 62 is the operating angle (β_operate). As can clearly be seen, the operating angle (β_operate) signal 62 has a different frequency content to the initial angle (β_initial) signal 61. In particular, frequency components from the initial angle (β_initial) 61 that may excite the edgewise resonant frequency of the blade 14 have been removed from the initial angle (β_initial) 61 to result in the operating angle (β_operate) 62.

Figure 7 shows the edgewise loading on the blade 14 as a function of time. The dashed line 63 is the edgewise loading if the initial angle (β_initial) is applied to the flap 21 without it being filtered by the notch filter 54. In this example, the initial angle (β_initial) would excite the edgewise resonant frequency of the blade 14 resulting in high edgewise loading which could damage the blade or even cause the blade to fail.

In contrast, in Figure 7, the solid line 64 shows the edgewise loading on the blade when the operating angle (β_operate) is applied to the flap 21, that is the signal has been filtered by the notch filter 54. As can be seen, the edgewise loading that the blade experiences is much less that than the edgewise loading experienced by the blade when the notch filter 54 is not used.

Using the notch filter 54 will not eliminate the edgewise loading - as can be seen from solid line 64 there is still edgewise loading on the blade. However, this is the edgewise loading caused by the weight of the rotor blade itself as it generates alternating tensile and compression forces along its length as it rotates, and the edgewise loading which results from acceleration/deceleration of the rotor and changes in aerodynamic drag - i.e. this is the edgewise loading that the blade would have seen anyway (from whatever cause) without the additional loading that would have resulted from exciting the structural resonance by the flap. This has a frequency which is the so-called 1P rotational frequency of the wind turbine rotor.

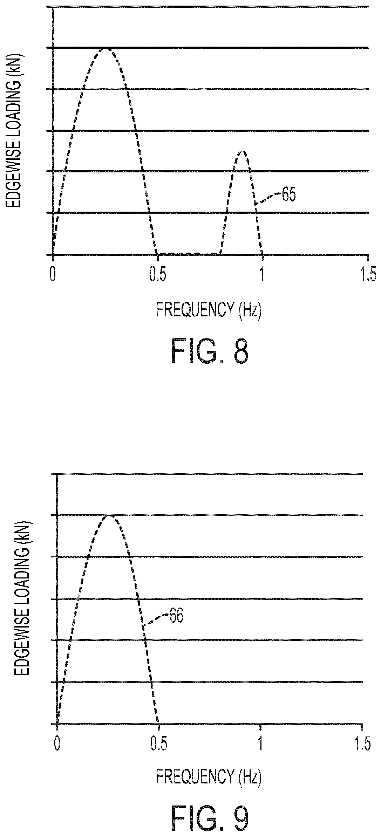

Figures 8 and 9 show the edgewise loading on the blade in the frequency domain. In particular, the dashed line 65 in Figure 8 is the edgewise loading on the blade 14 if the flap 21 is operated according to the initial angle (β_initial), that is without use of the notch filter 54. The first peak at around 0.25 Hz is the 1P edgewise loading of the wind turbine blade 14. The second peak at around 0.9 Hz is where the flap 21 has excited the edgewise resonant frequency of the blade 14 and caused high edgewise loads.

In Figure 9, the solid line 66 represents the edgewise loading on the blade 14 when the flap is operated according to the operating angle (β_operate) and the notch filter 54 is used. As can clearly be seen, the edgewise loading peak at 0.9 Hz has been removed by the notch filter 54 as the edgewise resonant frequency of the blade 14 is not excited. The first peak at around 0.25 Hz still exists because this is the 1P frequency caused by the cyclic rotation of the blades.

In this example, the edgewise resonant frequency of the blade is 0.9 Hz and the flaps 21 are designed to counteract wind disturbances having a frequency range between 0.1 Hz and 1.5 Hz. The notch filter 54 prevents the flap from operating at a frequency of 0.8 Hz to 1 Hz. However, if in the design process of the flaps it has been decided to only counteract wind disturbances having a frequency range of between 0.1 Hz to 1 Hz, then the notch filter 54 could be replaced with a low-pass filter than prevents the flap 21 from operating at frequencies higher than 0.8 Hz.

Similarly, if the blade 14 is of a "soft" or "flexible" design, rather than a "stiff" blade, it will have a much lower edgewise resonant frequency, such as 0.1 Hz. In this example the notch filter 54 could be replaced with a high-pass filter that prevents the flap from operating at frequencies below 0.2 Hz, in order to avoid stimulating the edgewise resonant frequency.

In the first example of Figure 4, the flap 21 is actuated to respond to changes in local wind disturbances at the rotor blade 14 in order to reduce fluctuations in the lift force experienced by the blade. In this first example, the control of the flap is a feed-forward control system based on wind disturbances detected by the sensors 35.

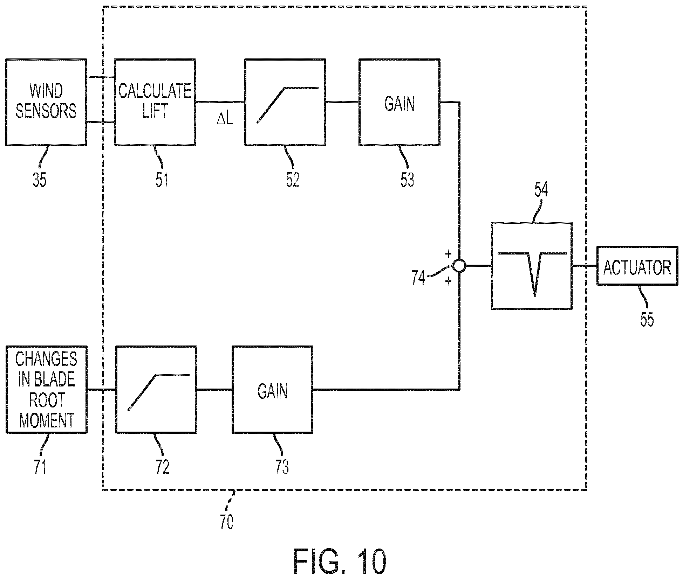

Figure 10 is a schematic of a second example of a controller 70 to control the flap 21, where the control of the flap is based on feed-forward measurements and feedback measurements. The feed-forward part of the controller 70 is the same as that described with respect to Figure 4, and this is shown in the top half of Figure 10 and is referred to as the "feed-forward control branch". In the lower half of Figure 10 is shown the feedback control system and this is referred to as the "feedback control branch".

In the feedback control branch, changes in the blade root flapwise moment which are detected by strain gauge 30 are passed via box 71 to a high pass filter 72 in order to remove low frequency components from this signal. The purpose of the high pass filter 72 is to ensure that the flaps are used to counteract fluctuations caused by the turbulent wind conditions, rather than the low frequency variations in the average wind speed. In this example, the high pass filter is arranged to remove frequency components below 0.5 Hz, which in this example is two rotor revolutions.

The filtered signal is then sent to an amplifier 73 which applies a gain to the change in blade root flapwise moment signal. The output of the amplifier 73 is a flap angle demand to be sent to the actuator 55 in order to move the flap. In this example, the amplifier 73 is a linear, but it is also possible to apply a non-linear gain.

The flap angle demand from the amplifier 53 and the amplifier 73 are summed at an adder unit 74 to combine the feed-forward flap angle demand signal and the feedback flap angle demand signal. The summed flap angle demand signal is then input to the notch filter as described above with respect to Figure 4.

The amplifiers 53 and 73 may apply a linear gain to the input signal. In this case, as the control system is a linear control system the notch filter 54 does not necessarily need to be located immediately before the actuator as shown in Figures 4 and 10. With a linear control system, the notch filter may actually be located anywhere. For example, in the feed-forward control branch of Figure 10, a first notch filter may be located before the lift calculation unit 51 and in the feedback control branch of Figure 10, a second notch filter may be located before the high pass filter 72 - the output from the adder unit is then input straight to the actuator 55 as the signals have already passed through notch filters.

The amplifier 53 and the amplifier 73 may in another example, be proportional-integral-derivative controllers (PID controllers), proportional-integral controllers (PI controllers) or proportional-derivative controllers (PD controllers).

As described above, more trailing edge flaps 21 may be present on the wind turbine blade 14. In this case, each flap 21 would have a pitot tube 35 (or other flow sensor) associated with it to measure the local wind conditions at the blade, including the local wind speed and the local angle of attack at the spanwise location of the flap 21. Each flap 21 may have its own controller 50, 70 or one controller may be provided for all the flaps. However, even if one controller is used for multiple flaps, each flap must have its own feed-forward control branch as this branch calculates changes in lift for each flap locally. But, a single feedback control branch can be used for all flaps.

Although the invention has been described with respect to trailing edge flaps, it is applicable to other movable aerodynamic devices on a wind turbine blade which are moved in order to reduce the loading on a blade. These may include leading edge flaps, microtabs, spoilers or active vortex generators. In the case of spoilers, microtabs and active vortex generators, these devices may not actually be set at an angle but are rather "deflected" or "not deflected" in the oncoming wind flow. However, the principles of the invention still apply that these devices are prevented from operating at a frequency that will excite the edgewise resonant frequency of the blade.

## Claims

1. A method of controlling a movable aerodynamic device (21) on a wind turbine rotor blade (14), the method comprising the steps of:
determining a device position demand as a function of time, the device position demand being calculated to reduce loading in the blade;
moving the device (21) according to the device position demand; and
preventing the device (21) from operating in a predetermined frequency band;
**characterised in that**:
the step of preventing the movable aerodynamic device (21) from operating in a predetermined frequency band comprises removing frequency components from the device position demand at the edgewise resonant frequency of the rotor blade (14) by applying a filter (54) to the device position demand.

2. A method according to claim 1, wherein the width of the frequency band is 0.2 Hz.

3. A method according to any one of the preceding claims, wherein the device position demand is calculated to reduce flapwise loading in the blade (14).

4. A method according to any one of the preceding claims, wherein the device position demand comprises:
a feed-forward device position demand component as a function of time; and/or
a feedback device position demand component as a function of time.

5. A method according to claim 4, wherein the feed-forward device position demand component is a device position determined to counteract wind disturbances detected at the rotor blade (14) or detected upstream of the rotor blade.

6. A method according to claim 5, wherein the step of determining the feed-forward device position demand component comprises:
detecting wind conditions at the rotor blade (14) or upstream of the rotor blade with a sensor (35); and
determining the feed-forward device position demand component so that movement of the device according to the feed-forward device position demand component counteracts wind disturbances in the detected wind conditions, such that loading in the blade is reduced.

7. A method according to any one of claims 4 to 6, wherein the feedback device position demand component is a device position determined to minimise changes in loading of the blade (14) .

8. A method according to claim 7, wherein the step of determining the feedback device position demand component comprises:
detecting changes in loading of the blade (14) with a sensor (30);
determining the feedback device position demand component so that movement of the device according to the feedback device position demand component minimises the changes in loading of the blade.

9. A method according to any claims 4 to 8, wherein the step of determining the device position demand comprises:
summing the feed-forward device position demand component with the feedback device position demand component.

10. A method according to any of claims 4 to 9, wherein the step of preventing the device (21) from operating in a predetermined frequency band comprises:
applying the filter (54) to the feed-forward device position demand component; and/or
applying the filter (54) to the feedback device position demand component.

11. A method according to claim 6, wherein the step of preventing the device from operating in a predetermined frequency band comprises:
applying a further filter (52) to the detected wind conditions.

12. A method according to claim 8, wherein the step of preventing the device from operating in a predetermined frequency band comprises:
applying a further filter (72) to the detected changes in loading of the blade.

13. A method according to claim 1, wherein the filter (54) comprises a band-stop filter.

14. A method according to claim 1, wherein the filter (54) comprises a notch filter.

15. A method according to claim 1, wherein the filter (54) comprises a high-pass filter or a low-pass filter.

16. A method according to any of the preceding claims, wherein the movable aerodynamic device (21) is one of a trailing edge flap, a leading edge flap, a movable spoiler, a microtab, a movable vortex generator.

17. A method according to any of claims 1 to 15, wherein the movable aerodynamic device (21) is a trailing edge flap and the device position demand is a flap angle demand.

18. A controller (50) for a wind turbine rotor blade (14), the wind turbine rotor blade having a movable aerodynamic device (21), the controller being arranged to carry out the method according to any one of claims 1 to 15.

19. A wind turbine (10) having a rotor blade (14) having a movable aerodynamic device (21), the wind turbine comprising a controller (50) according to claim 18.

## Patentansprüche

1. Verfahren zum Steuern einer beweglichen aerodynamischen Vorrichtung (21) auf einem Windturbinen-Rotorblatt (14), wobei das Verfahren die Schritte umfasst von:
Bestimmen einer Vorrichtungspositionsanforderung als eine Funktion der Zeit, wobei die Vorrichtungspositionsanforderung berechnet wird, um eine Belastung in dem Blatt zu verringern;
Bewegen der Vorrichtung (21) entsprechend der Vorrichtungspositionsanforderung; und
Verhindern, dass die Vorrichtung (21) in einem vorbestimmten Frequenzband arbeitet;
**dadurch gekennzeichnet, dass**:
der Schritt des Verhinderns, dass die bewegliche aerodynamische Vorrichtung (21) in einem vorbestimmten Frequenzband arbeitet, ein Entfernen von Frequenzkomponenten von der Vorrichtungspositionsanforderung bei der Resonanzfrequenz in Schwenkrichtung des Rotorblatts (14) durch Anwenden eines Filters (54) auf die Vorrichtungspositionsanforderung umfasst.

2. Verfahren nach Anspruch 1, wobei die Breite des Frequenzbands 0,2 Hz beträgt.

3. Verfahren nach einem der vorstehenden Ansprüche, wobei die Vorrichtungspositionsanforderung berechnet wird, um die Belastung in Schlagrichtung in dem Blatt (14) zu verringern.

4. Verfahren nach einem der vorstehenden Ansprüche, wobei die Vorrichtungspositionsanforderung umfasst:
eine vorwärtsgekoppelte Vorrichtungspositionsanforderungskomponente als eine Funktion der Zeit; und/oder
eine rückgekoppelte Vorrichtungspositionsanforderungskomponente als eine Funktion der Zeit.

5. Verfahren nach Anspruch 4, wobei die vorwärtsgekoppelte Vorrichtungspositionsanforderungskomponente eine Vorrichtungsposition ist, die dazu bestimmt ist, Windstörungen, die an dem Rotorblatt (14) erfasst werden oder stromaufwärts von dem Rotorblatt erfasst werden, entgegenzuwirken.

6. Verfahren nach Anspruch 5, wobei der Schritt des Bestimmens der vorwärtsgekoppelten Vorrichtungspositionsanforderungskomponente umfasst:
Erfassen von Windbedingungen an dem Rotorblatt (14) oder stromaufwärts von dem Rotorblatt mit einem Sensor (35); und
Bestimmen der vorwärtsgekoppelten Vorrichtungspositionsanforderungskomponente, sodass eine Bewegung der Vorrichtung gemäß der vorwärtsgekoppelten Vorrichtungspositionsanforderungskomponente Windstörungen in den erfassten Windbedingungen entgegenwirkt, sodass eine Belastung in dem Blatt verringert wird.

7. Verfahren nach einem der Ansprüche 4 bis 6, wobei die rückgekoppelte Vorrichtungspositionsanforderungskomponente eine Vorrichtungsposition ist, die dazu bestimmt ist, Änderungen in einer Belastung des Blatts (14) zu minimieren.

8. Verfahren nach Anspruch 7, wobei der Schritt des Bestimmens der rückgekoppelten Vorrichtungspositionsanforderungskomponente umfasst:
Erfassen von Änderungen in einer Belastung des Blatts (14) mit einem Sensor (30);
Bestimmen der rückgekoppelten Vorrichtungspositionsanforderungskomponente, sodass eine Bewegung der Vorrichtung gemäß der rückgekoppelten Vorrichtungspositionsanforderungskomponente die Änderungen in einer Belastung des Blatts minimiert.

9. Verfahren nach einem der Ansprüche 4 bis 8, wobei der Schritt des Bestimmens der Vorrichtungspositionsanforderung umfasst:
Summieren der vorwärtsgekoppelten Vorrichtungspositionsanforderungskomponente mit der rückgekoppelten Vorrichtungspositionsanforderungskomponente.

10. Verfahren nach einem der Ansprüche 4 bis 9, wobei der Schritt des Verhinderns, dass die Vorrichtung (21) in einem vorbestimmten Frequenzband arbeitet, umfasst:
Anwenden des Filters (54) auf die vorwärtsgekoppelte Vorrichtungspositionsanforderungskomponente; und/oder
Anwenden des Filters (54) auf die rückgekoppelte Vorrichtungspositionsanforderungskomponente.

11. Verfahren nach Anspruch 6, wobei der Schritt des Verhinderns, dass die Vorrichtung in einem vorbestimmten Frequenzband arbeitet, umfasst:
Anwenden eines weiteren Filters (52) auf die erfassten Windbedingungen.

12. Verfahren nach Anspruch 8, wobei der Schritt des Verhinderns, dass die Vorrichtung in einem vorbestimmten Frequenzband arbeitet, umfasst:
Anwenden eines weiteren Filters (72) auf die erfassten Änderungen in einer Belastung des Blatts.

13. Verfahren nach Anspruch 1, wobei der Filter (54) einen Bandsperrfilter umfasst.

14. Verfahren nach Anspruch 1, wobei der Filter (54) einen Kerbfilter umfasst.

15. Verfahren nach Anspruch 1, wobei der Filter (54) einen Hochpassfilter umfasst.

16. Verfahren nach einem der vorstehenden Ansprüche, wobei die bewegliche aerodynamische Vorrichtung (21) eine ist, von einer Blatthinterkantenklappe, einer Blattvorderkantenklappe, einem beweglichen Spoiler, einem Mikrotab, einem beweglichen Wirbelerzeuger.

17. Verfahren nach einem der Ansprüche 1 bis 15, wobei die bewegliche aerodynamische Vorrichtung (21) eine Blatthinterkantenklappe ist und die Vorrichtungspositionsanforderung eine Klappenwinkelanforderung ist.

18. Steuervorrichtung (50) für ein Windturbinen-Rotorblatt (14), wobei das Windturbinen-Rotorblatt eine bewegliche aerodynamische Vorrichtung (21) aufweist, wobei die Steuervorrichtung angeordnet ist, um das Verfahren nach einem der Ansprüche 1 bis 15 auszuführen.

19. Windturbine (10), die ein Rotorblatt (14) aufweist, das eine bewegliche aerodynamische Vorrichtung (21) aufweist, wobei die Windturbine eine Steuervorrichtung (50) nach Anspruch 18 umfasst.

## Revendications

1. Procédé de commande d'un dispositif aérodynamique mobile (21) sur une pale de rotor d'éolienne (14), le procédé comprenant les étapes suivantes :
la détermination d'une demande de position de dispositif en fonction du temps, la demande de position de dispositif étant calculée pour réduire la charge dans la pale ;
le mouvement du dispositif (21) selon la demande de position de dispositif ; et
l'empêchement du fonctionnement du dispositif (21) dans une bande de fréquence prédéfinie ;
**caractérisé en ce que** :
l'étape d'empêchement du fonctionnement du dispositif aérodynamique mobile (21) dans une bande de fréquence prédéfinie comprend la suppression de composantes de fréquence de la demande de position de dispositif à la fréquence de résonance dans la direction longitudinale du profil de la pale de rotor (14) par application d'un filtre (54) à la demande de position de dispositif.

2. Procédé selon la revendication 1, dans lequel la largeur de la bande de fréquence est de 0,2 Hz.

3. Procédé selon l'une quelconque des revendications précédentes, dans lequel la demande de position de dispositif est calculée pour réduire la charge dans la direction transversale dans la pale (14).

4. Procédé selon l'une quelconque des revendications précédentes, dans lequel la demande de position de dispositif comprend :
une composante de demande de position de dispositif par anticipation en fonction du temps ; et/ou
une composante de demande de position de dispositif en réaction en fonction du temps.

5. Procédé selon la revendication 4, dans lequel la composante de demande de position de dispositif par anticipation est une position de dispositif déterminée pour contrecarrer les perturbations du vent détectées au niveau de la pale de rotor (14) ou détectées en amont de la pale de rotor.

6. Procédé selon la revendication 5, dans lequel l'étape de détermination de la composante de demande de position de dispositif par anticipation comprend :
la détection des conditions de vent au niveau de la pale de rotor (14) ou en amont de la pale de rotor avec un capteur (35) ; et
la détermination de la composante de demande de position de dispositif par anticipation de sorte que le mouvement du dispositif selon la composante de demande de position de dispositif par anticipation contrecarre les perturbation du vent dans les conditions de vent détectées, de telle sorte que la charge dans la pale est réduite.

7. Procédé selon l'une quelconque des revendications 4 à 6, dans lequel la composante de demande de position de dispositif en réaction est une position de dispositif déterminée pour minimiser les changements dans la charge de la pale (14).

8. Procédé selon la revendication 7, dans lequel l'étape de détermination de la composante de demande de position de dispositif en réaction comprend :
la détection de changements dans la charge de la pale (14) avec un capteur (30) ;
la détermination de la composante de demande de position de dispositif en réaction de sorte qu'un mouvement du dispositif selon la composante de demande de position de dispositif en réaction minimise les changements dans la charge de la pale.

9. Procédé selon l'une quelconque des revendications 4 à 8, dans lequel l'étape de détermination de la demande de position de dispositif comprend :
l'ajout de la composante de demande de position de dispositif par anticipation à la composante de demande de position de dispositif en réaction.

10. Procédé selon l'une quelconque des revendications 4 à 9, dans lequel l'étape d'empêchement du fonctionnement du dispositif (21) dans une bande de fréquence prédéfinie comprend :
l'application du filtre (54) à la composante de demande de position de dispositif par anticipation ; et/ou
l'application du filtre (54) à la composante de demande de position de dispositif en réaction.

11. Procédé selon la revendication 6, dans lequel l'étape d'empêchement du fonctionnement du dispositif dans une bande de fréquence prédéfinie comprend :
l'application d'un autre filtre (52) aux conditions de vent détectées.

12. Procédé selon la revendication 8, dans lequel l'étape d'empêchement du fonctionnement du dispositif dans une bande de fréquence prédéfinie comprend :
l'application d'un autre filtre (72) aux changements détectés dans la charge de la pale.

13. Procédé selon la revendication 1, dans lequel le filtre (54) comprend un filtre coupe-bande.

14. Procédé selon la revendication 1, dans lequel le filtre (54) comprend un filtre à encoche.

15. Procédé selon la revendication 1, dans lequel le filtre (54) comprend un filtre passe-haut ou un filtre passe-bas.

16. Procédé selon l'une quelconque des revendications précédentes, dans lequel le dispositif aérodynamique mobile (21) est l'un d'un volet de bord de fuite, d'un volet de bord d'attaque, d'un spoiler mobile, d'une micro-languette, d'un générateur de tourbillon mobile.

17. Procédé selon l'une quelconque des revendications 1 à 15, dans lequel le dispositif aérodynamique mobile (21) est un volet de bord de fuite et la demande de position de dispositif est une demande d'angle de volet.

18. Dispositif de commande (50) pour une pale de rotor d'éolienne (14), la pale de rotor d'éolienne ayant un dispositif aérodynamique mobile (21), le dispositif de commande étant conçu pour mettre en oeuvre le procédé selon l'une quelconque des revendications 1 à 15.

19. Eolienne (10) ayant une pale de rotor (14) ayant un dispositif aérodynamique mobile (21), l'éolienne comprenant un dispositif de commande (50) selon la revendication 18.
